# DEMANDE DE BREVET EUROPEEN

(11) **EP 1 876 858 A1**
(43) Date de publication de la demande: **09.01.2008**
(21) Numéro de dépôt: 07301145.4
(22) Date de dépôt: 22.06.2007
(51) Int. Cl.: H04Q 7/38

(54) **Planification de transmissions de signaux dans un réseau de radiocommunication cellulaire**

(30) Priorité: 07.07.2006 FR 0652875
(71) Demandeur: FRANCE TELECOM, 75015 Paris (FR)
(72) Inventeur: Kelif, Jean-Marc, 75012, PARIS (FR); Ibrahim, Nicolas, 78180, MONTIGNY-LE-BRETONNEUX (FR)
(74) Mandataire: Lapoux, Roland

(57) **Abrégé**

Pour planifier des transmissions de signaux à des mobiles depuis des stations de base (SB) couvrant respectivement des cellules dans un réseau de radiocommunication cellulaire (RR), les transmissions étant partagées en des intervalles de temps, un dispositif de planification (DP) divise le réseau en des motifs ayant chacun des stations de base dont les transmissions sont susceptibles d'interférer entre elles. Pour chaque station de base d'un motif et à chaque intervalle de temps, le dispositif classe les mobiles couverts par la station de base dans des groupes en fonction de puissances requises par les mobiles, le nombre des groupes étant égal au nombre de stations de base du motif. Le dispositif commande alors la transmission d'un signal aux mobiles classés dans l'un des groupes depuis au moins l'une des stations de base du motif à chaque intervalle de temps.

## Description

La présente invention concerne une planification de transmissions de signaux sur lien descendant à des mobiles depuis des stations de base respectivement associées à des cellules dans un réseau de radiocommunication cellulaire.

Les opérateurs de réseaux de radiocommunication cherchent à maximiser le nombre de mobiles pouvant être servis pour une qualité de service donnée, cette qualité pouvant être variable selon les mobiles.

Certains procédés d'attribution de débits sont construits sur un partage équitable des ressources radio entre les mobiles présents dans la cellule couverte par une station de base. Ce partage équitable est relatif à la durée ce qui signifie qu'à chacun des mobiles est attribué le même nombre d'intervalles de temps, ou relatif au débit ce qui signifie qu'à chacun des mobiles est attribué le même débit.

Selon d'autres procédés d'attribution de débits connus, des ressources radio sont attribuées aux mobiles ayant la meilleure qualité instantanée de lien descendant, et ainsi le débit de la cellule est maximisé. En raison de ce critère d'attribution de débit, les mobiles qui sont proches de la station de base ont une probabilité d'attribution de débit plus élevée que les autres mobiles, et un débit peut ne jamais être attribué à un mobile situé en limite de couverture de la cellule.

Cependant, ces procédés d'attribution de débits ne sont pas influencés par l'environnement de la cellule dans le réseau et ne sont pas adaptés aux contraintes réelles des mobiles et de l'opérateur du réseau. En particulier, ces procédés d'attribution de débits ne dépendent pas des puissances d'interférence (inter)cellulaire reçues par les mobiles qui détériorent la qualité de service offerte par le réseau.

Pour remédier à ces inconvénients, un procédé pour planifier des transmissions de signaux à des mobiles depuis des stations de base couvrant respectivement des cellules dans un réseau de radiocommunication cellulaire, les transmissions étant partagées en des intervalles de temps, est caractérisé en ce qu'il comprend les étapes de :
diviser le réseau en des motifs ayant chacun des stations de base couvrant respectivement des cellules voisines et dont les transmissions sont susceptibles d'interférer entre elles,
pour chaque station de base d'un motif et à chaque intervalle de temps, classer les mobiles couverts par la station de base dans des groupes en fonction de puissances requises par les mobiles, le nombre des groupes étant égal au nombre de stations de base du motif, et
à chaque intervalle de temps, transmettre un signal aux mobiles classés dans l'un des groupes depuis au moins l'une des stations de base du motif.

Toutes les stations de base du motif peuvent transmettre simultanément un signal aux mobiles classés dans l'un des groupes

Le procédé de l'invention considère les besoins réels de l'opérateur et de chaque mobile. En particulier, il aboutit à la planification des transmissions de signaux à des mobiles depuis des stations de base en satisfaisant la qualité de service demandée par les mobiles et en fonction de la topologie du réseau et des interférences intercellulaires subies par les mobiles dans le réseau. Cette planification diminue dynamiquement les interférences intercellulaires subies par les mobiles dans le réseau et augmente les performances du réseau.

Le procédé selon l'invention est applicable aux services "en temps réel" tels que la voix, ainsi qu'aux services "non en temps réel" tels qu'un téléchargement de données. Le procédé s'adapte à divers ordonnancements de groupes de mobile de manière à diminuer les interférences intercellulaires auxquelles sont soumis des mobiles dans un motif, ou à offrir équitablement une puissance d'émission de station de base moyenne au mobile.

Selon une autre caractéristique de l'invention, le procédé comprend en outre une association de puissances d'émission de chaque station de base du motif respectivement aux groupes de mobile afin que la station de base transmette le signal aux mobiles d'un groupe avec la puissance d'émission associée au groupe.

Selon l'invention, la puissance d'émission de chaque station de base est adaptée aux besoins des mobiles situés dans la cellule couverte par la station de base. Par conséquent, les interférences intercellulaires subies par les mobiles dans une cellule sont diminuées de manière optimale tout en garantissant une qualité de service aux mobiles situés dans des cellules voisines.

L'invention concerne également un dispositif pour planifier des transmissions de signaux à des mobiles depuis des stations de base couvrant respectivement des cellules dans un réseau de radiocommunication cellulaire, les transmissions étant partagées en des intervalles de temps, caractérisé en ce qu'il comprend :
- un moyen pour diviser le réseau en des motifs ayant chacun des stations de base couvrant respectivement des cellules voisines et dont les transmissions sont susceptibles d'interférer entre elles,
- un moyen pour classer les mobiles couverts par chaque station de base d'un motif dans des groupes en fonction de puissances requises par les mobiles à chaque intervalle de temps, le nombre des groupes étant égal au nombre de stations de base du motif, et
- un moyen pour commander la transmission d'un signal aux mobiles classés dans l'un des groupes depuis au moins l'une des stations de base du motif à chaque intervalle de temps.

Lesdits moyens peuvent être totalement répartis dans les stations de base ou bien au moins partiellement inclus dans un contrôleur du réseau de radiocommunication pour surveiller et diminuer rapidement des puissances d'interférence intercellulaire reçues par les mobiles de manière à optimiser en temps réel le débit instantané du lien descendant offert par le réseau aux mobiles.

L'invention est également relative à un contrôleur de réseau pour planifier des transmissions de signaux à des mobiles depuis des stations de base couvrant respectivement des cellules dans un réseau de radiocommunication cellulaire et reliées au contrôleur de réseau, les transmissions étant partagées en des intervalles de temps, caractérisé en ce qu'il comprend :
- un moyen pour diviser le réseau en des motifs ayant chacun des stations de base couvrant respectivement des cellules voisines et dont les transmissions sont susceptibles d'interférer entre elles,
- un moyen pour classer les mobiles couverts par chaque station de base d'un motif dans des groupes en fonction de puissances requises par les mobiles à chaque intervalle de temps, le nombre des groupes étant égal au nombre de stations de base du motif, et
- un moyen pour commander la transmission d'un signal aux mobiles classés dans l'un des groupes depuis au moins l'une des stations de base du motif à chaque intervalle de temps.

L'invention est encore relative à un système pour planifier des transmissions de signaux à des mobiles depuis des stations de base couvrant respectivement des cellules et reliées à un contrôleur de réseau dans un réseau de radiocommunication cellulaire, les transmissions étant partagées en des intervalles de temps, caractérisé en ce qu'il comprend, répartis dans les stations de base et le contrôleur de réseau :
- un moyen pour diviser le réseau en des motifs ayant chacun des stations de base couvrant respectivement des cellules voisines et dont les transmissions sont susceptibles d'interférer entre elles,
- un moyen pour classer les mobiles couverts par chaque station de base d'un motif dans des groupes en fonction de puissances requises par les mobiles à chaque intervalle de temps, le nombre des groupes étant égal au nombre de stations de base du motif, et
- un moyen pour commander la transmission d'un signal aux mobiles classés dans l'un des groupes depuis au moins l'une des stations de base du motif à chaque intervalle de temps.

L'invention se rapporte encore à un programme d'ordinateur apte à être mis en oeuvre dans un dispositif pour planifier des transmissions de signaux à des mobiles depuis des stations de base couvrant respectivement des cellules dans un réseau de radiocommunication cellulaire, ledit programme comprenant des instructions qui, lorsque le programme est exécuté dans ledit dispositif, réalisent les étapes selon le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un dispositif de planification pour planifier des transmissions de signaux selon l'invention dans un réseau de radiocommunication cellulaire ;
- la figure 2 est un schéma d'un modèle d'un réseau de radiocommunication tri-sectoriel selon l'invention ; et
- la figure 3 est un algorithme d'un procédé de planification de transmissions de signaux selon l'invention.

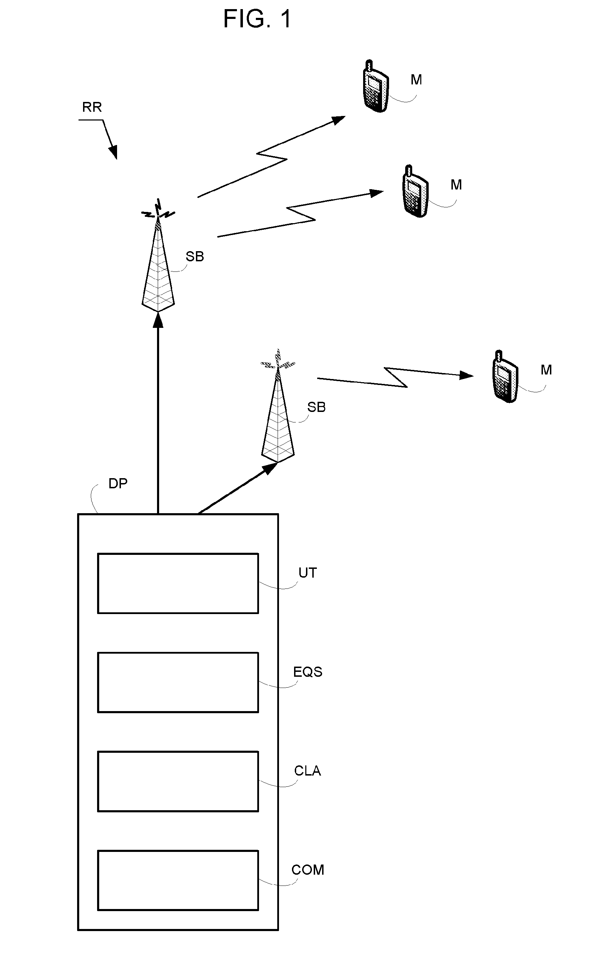

En référence à la figure 1, des moyens fonctionnels inclus dans un dispositif de planification DP mettent en oeuvre le procédé de l'invention dans un réseau de radiocommunication cellulaire numérique RR à accès multiple à répartition par codes CDMA ("Code Division Multiple Access" en anglais) ou à accès multiple à répartition par codes à large bande WCDMA ("Wideband Code Division Multiple Access" en anglais) du type UMTS ("Universal Mobile Telecommunications System" en anglais).

Par exemple, le réseau de radiocommunication RR dispose de canaux de transport partagés descendants à débit élevé HSDPA ("High Speed Downlink Packet Access" en anglais).

Le dispositif de planification DP inclut une unité de traitement UT, un estimateur de qualité de service EQS, un module de classement CLA et un module de commande COM.

Le dispositif de planification DP est par exemple inclus dans ou lié à un contrôleur de réseau radio RNC ("Radio Network Controller" en anglais) dans la partie fixe du réseau de radiocommunication RR et relié à des stations de base SB, dites également noeuds B selon la terminologie de réseau d'accès radio terrestre universel UTRAN ("Universal Terrestrial Radio Access Network" en anglais), desservies par le contrôleur. Le contrôleur RNC contrôle la charge radio de manière à distribuer des ressources radio aux stations de base et l'admission de mobiles dans les cellules des stations de base que le contrôleur RNC dessert. Selon une variante, les fonctions du dispositif de planification DP décrites ci-après sont réparties dans le contrôleur de réseau et les stations de base reliées au contrôleur de réseau.

Chaque station de base SB transmet un signal de liens actifs descendants à des mobiles M situés dans la zone de couverture de la station de base.

Les mobiles M sont par exemple des terminaux de radiocommunication cellulaire mobiles. Selon d'autres exemples, les mobiles M sont des assistants numériques personnels communicants PDA, ou des ordinateurs portables communicants, ou encore des téléphones intelligents ("SmartPhone" en anglais), pouvant communiquer avec le réseau de radiocommunication. Les mobiles sont adaptés au type du réseau RR, par exemple à large bande du type FDD W-CDMA ("Frequency Division Duplex Wideband-CDMA" en anglais) selon la troisième génération (3GPP) de réseaux du type UMTS.

Afin de ne pas surcharger la figure 1, seuls trois mobiles M et deux stations de base SB sont représentés.

Un rapport signal à interférence CIR ("Carrier-to-Interference Ratio" en anglais) reçu par un mobile situé à un emplacement donné sous la couverture d'une station de base SB dépend de la puissance d'émission de la station de base, des pertes liées au canal de propagation entre la station de base et le mobile, et des puissances d'interférence intracellulaires et intercellulaires reçues par le mobile.

Plus particulièrement, les puissances d'interférence et des évanouissements rapides ("fast fading", en anglais) dus aux puissances d'émission des stations de base voisines interviennent d'une manière prépondérante dans le rapport signal à interférence reçu par le mobile. Le débit instantané de lien descendant requis par le mobile peut être déduit précisément à l'aide du rapport signal à interférence reçu par le mobile. Par ailleurs, il est possible de modifier les puissances d'émission des stations de base afin de limiter les puissances d'interférence reçues par les mobiles.

Le contrôleur RNC est capable d'admettre "l'entrée" d'un mobile dans une cellule afin que le mobile communique avec la station de base associée à la cellule si au moins un débit moyen requis par le mobile est atteint comme gage de qualité de service, ou de refuser l'entrée du mobile si le réseau est incapable de lui offrir la qualité de service requise et donc si le réseau lui offre un débit inférieur au débit moyen requis suite à un rapport signal à interférence reçu par le mobile trop faible. Si le service est du type "temps réel", comme par exemple un service multimédia appelé "streaming" offrant un flux continu de contenu à écouter et/ou visualiser, le contrôleur veille en plus à offrir un débit sensiblement régulier sur une durée prédéterminée.

De manière générale, une communication demandée par un mobile est établie en fonction du service requis par le mobile, avec le débit instantané de lien descendant que peut fournir la station de base au mobile.

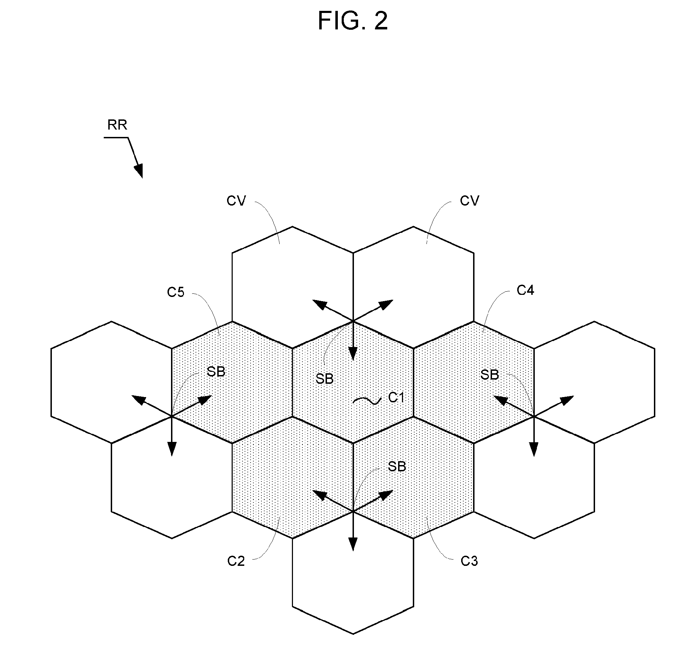

A titre d'exemple montré à la figure 2, le réseau RR est tri-sectoriel, c'est-à-dire chaque cellule du réseau est divisée en trois secteurs, représentés de manière classique par des hexagones juxtaposés. Chaque station de base SB d'une cellule comprend trois stations de base directives couvrant chacune l'un des trois secteurs de la cellule. On considère alors que chaque secteur est assimilé à une cellule dont la couverture est assurée par une station de base directive, représentée par une flèche dans la figure 2.

Dans un réseau cellulaire tri-sectoriel tel que celui illustré à la figure 2, une transmission dans une cellule est susceptible d'interférer avec des transmissions dans quatre cellules voisines, selon la directivité des stations de base associées aux cellules voisines. Par souci de simplification de langage, on dit alors qu'une cellule "interfère" avec des cellules voisines. Dans cet exemple, la cellule C1 interfère avec les cellules voisines C2, C3, C4 et C5 qui sont situées sensiblement suivant et latéralement à la direction de transmission de la station de base de la cellule C1. On considère que les deux cellules voisines CV représentées dans la figure 2 derrière la cellule C1 n'interfèrent pas avec cette dernière puisque les stations de base associées ont des directions de transmission opposées à celle de la cellule C1. Dans ce cas, le réseau peut être divisé en des motifs de N = 5 cellules susceptibles d'interférer entre elles.

Selon un autre exemple, dans un réseau cellulaire mono-sectoriel, une station de base omnidirectionnelle est située au centre de chaque cellule et chaque cellule interfère avec six cellules voisines. Dans ce cas, le réseau peut être divisé en des motifs de N = 7 cellules susceptibles d'interférer entre elles.

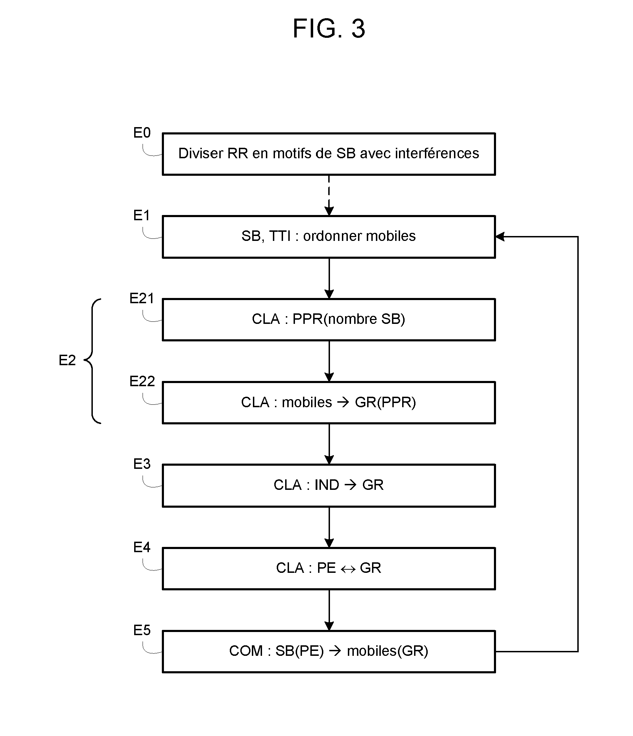

En référence à la figure 3, le procédé de planification selon l'invention comprend des étapes E1 à E5 exécutées automatiquement et cycliquement dans le dispositif de planification DP.

Initialement, chaque station de base SB dessert une zone de couverture, c'est-à-dire une cellule, dans laquelle sont situés des mobiles. Les stations de base disposent de canaux de transport divisés en des intervalles de temps TTI ("Transmission Time Interval" en anglais) de durée constante, par exemple de 2 ms pour le canal de transport HSDPA, pour transmettre des signaux aux mobiles sous la couverture des stations de base.

A une étape initiale E0, l'unité de traitement UT analyse la topologie du réseau de radiocommunication cellulaire numérique RR et la directivité des stations de base SB respectivement associées aux cellules du réseau. L'unité de traitement UT divise le réseau en des motifs ayant chacun des stations de base dont les transmissions sont susceptibles d'interférer entre elles, notamment en fonction de la topologie du réseau RR et de la directivité des stations de base. Les motifs peuvent comprendre un même nombre de stations de base, ou bien deux motifs peuvent comprendre des nombres de stations de base différents.

Par exemple, si le réseau RR est tri-sectoriel, l'unité de traitement UT divise le réseau en des motifs ayant chacun N = 5 stations de base respectives dont les transmissions sont susceptibles d'interférer entre elles.

En variante, l'étape initiale E0 est exécutée dans un ordinateur ou une station de travail ou tout autre système informatique relié au dispositif de planification DP.

Les étapes suivantes E1 à E5 sont exécutées pour chacune des N stations de base SB déterminées par l'unité de traitement UT dans un motif donné et à chaque intervalle de temps TTI. Ces étapes sont décrites ci-après pour une station de base donnée parmi les N stations de base SB du motif donné.

A l'étape optionnelle E1, l'estimateur de qualité de service EQS ordonne les mobiles sous la couverture de la station de base donnée en fonction de puissances requises par les mobiles pour atteindre une qualité de service donnée.

Par exemple, une application logicielle d'estimation de puissance incluse dans chaque mobile mesure la puissance totale reçue par le mobile et transmet la puissance mesurée, lors de l'intervalle de temps précédent, au dispositif de planification via la station de base donnée. Selon d'autres exemples, l'application logicielle mesure la puissance reçue par le mobile et provenant de la station de base donnée avec laquelle ce dernier communique ainsi que la puissance totale reçue par le mobile et provenant de l'ensemble du réseau, ou bien l'application logicielle mesure directement le rapport signal à interférence reçu par le mobile. Dans le cas d'un réseau de radiocommunication disposant de canaux de transport partagés descendants à débit élevé HSDPA, l'application logicielle mesure par exemple un indicateur de qualité de canal CQI ("Channel Quality Indicator" en anglais) indiquant le niveau de réception d'un signal radio de référence émis par la station de base donnée dépendant de la puissance du signal radio reçue par le mobile.

L'estimateur de qualité de service EQS analyse les puissances mesurées par les mobiles et en déduit les puissances requises par les mobiles pour atteindre une qualité de service donnée. Les mobiles couverts par la station de base donnée sont alors ordonnés par exemple de manière croissante ou décroissante en fonction desdites puissances requises par les mobiles.

A des étapes E21 et E22 composant l'étape E2, les mobiles situés dans la cellule couverte par la station de base donnée sont répartis par le module de classement CLA dans des groupes GR, en fonction des puissances requises par les mobiles, qui sont par exemple déterminées lors de l'intervalle de temps précédant. Ce classement est décrit ci-dessous.

A l'étape E21, le module de classement CLA détermine des seuils de puissance requise pour délimiter des plages de puissance requise consécutives PPR en nombre égal au nombre déterminé N de stations de base dans le motif donné . Par exemple, les plages de puissance requise ont des longueurs égales et la juxtaposition desdites plages conduit à une plage qui est délimitée par une puissance minimale d'émission et une puissance maximale d'émission de la station de base et qui définit la cellule couverte par la station de base donnée. Dans un autre exemple, les plages de puissance requise pour la station de base donnée ont des longueurs qui diffèrent en fonction notamment de statistiques sur la mobilité des mobiles par rapport à la station de base donnée.

A l'étape E22, le module de classement CLA classe les mobiles couverts par la station de base donnée dans des groupes GR en fonction des puissances requises par les mobiles. Par exemple, les groupes GR sont en nombre égal au nombre N de stations de base initialement déterminé à l'étape E0 et sont associés respectivement aux plages de puissance requise précédemment déterminées. Le module CLA compare par exemple la puissance requise par chaque mobile aux seuils de puissance requise déterminés afin de classer le mobile dans le groupe associé à la plage contenant la puissance requise par le mobile.

Dans l'exemple de réseau tri-sectoriel montré à la figure 2, les mobiles sont classés dans N = 5 groupes GR.

Par ailleurs, chaque groupe GR peut contenir un nombre différent de mobiles, et au moins un groupe peut ne contenir aucun mobile ou qu'un mobile.

A l'étape E3, le module de classement CLA attribue des indices IND respectivement aux groupes de mobile GR dans lesquels les mobiles couverts par la station de base donnée sont classés. Les indices des groupes dépendent des plages de puissance requise PPR associées aux groupes. Par exemple, les indices sont proportionnels aux plages de puissances requises.

Dans l'exemple de réseau tri-sectoriel montré à la figure 2, des indices IND de valeurs 0 à (N-1) = 4 sont respectivement attribués aux N = 5 groupes GR qui sont respectivement associés à des plages de puissance requise PPR croissantes. Dans ce cas, les mobiles classés dans le groupe d'indice 0 requièrent une faible puissance de transmission et les mobiles classés dans le groupe d'indice 4 requièrent une forte puissance de transmission.

Par ailleurs, puisque le module CLA classe les mobiles dans des groupes GR pour chaque station de base, deux groupes auxquels est attribué un même indice pour deux stations de base peuvent contenir un nombre différent de mobiles.

A l'étape optionnelle E4, le module de classement CLA associe des puissances d'émission PE à fournir par la station de base donnée respectivement aux groupes de mobile GR.

Par exemple, la puissance d'émission PE d'un groupe de mobile est inversement proportionnelle à l'indice IND du groupe, ou bien à la moyenne des seuils limitant la plage de puissance requise PPR associée au groupe, ou bien encore à la moyenne des puissances requises par les mobiles du groupe.

Par conséquent, la station de base donnée transmet un signal aux mobiles d'un groupe avec une puissance d'émission différente de celle utilisée pour des mobiles d'un autre groupe.

A l'étape E5, le module de commande COM commande à la station de base donnée une transmission de signal aux mobiles classés dans l'un des groupes, selon un algorithme d'ordonnancement de groupes de mobile pré-mémorisé dans le dispositif de planification DP.

La station de base donnée transmet un signal aux mobiles d'un groupe avec la puissance d'émission PE associée au groupe.

Puisque les étapes E1 à E5 sont cycliques, les nombres des mobiles classés dans les groupes peuvent varier d'un intervalle de temps TTI au suivant. En outre, des mobiles peuvent être détachés du réseau RR et d'autres mobiles peuvent être attachés au réseau RR d'un intervalle de temps au suivant.

L'algorithme d'ordonnancement pré-mémorisé détermine pour chaque intervalle de temps et pour chaque station de base du motif le groupe de mobile auquel un signal est à transmettre par la station de base.

Selon un algorithme d'ordonnancement pour faible interférence, les stations de base du motif transmettent des signaux respectivement à des groupes de mobile ayant des indices IND différents entre eux, c'est-à-dire ayant des plages de puissances requises différentes à chaque intervalle de temps TTI. Ainsi des mobiles demandant une faible puissance de transmission vont être servis avec un minimum de puissance par l'une des stations de base du motif, tandis que des mobiles demandant une forte puissance de transmission vont être servis avec un maximum de puissance par une autre des stations de base du motif, ce qui diminue globalement les interférences intercellulaires subies par l'ensemble des mobiles dans le motif.

Par exemple, pendant un même intervalle de temps TTI, au moins deux stations de base SB du motif transmettent des signaux vers au moins deux groupes de mobile GR différents.

Dans l'exemple de réseau tri-sectoriel montré à la figure 2, les N = 5 stations de base de la cellule C1 et des cellules voisines C2, C3, C4 et C5 peuvent transmettre des signaux aux mobiles classés dans les groupes dont les indices IND sont respectivement égaux à 0, 1, 2, 3, et 4 à un intervalle de temps donné, puis respectivement égaux à 1, 2, 3, 4, 5 et 0 à l'intervalle de temps consécutif à l'intervalle de temps donné. Ainsi, à chaque intervalle de temps, chaque station de base transmet un signal à un seul groupe à la fois. Dans l'exemple précédent, à l'intervalle de temps donné, la station de base de la cellule C1 transmet un signal au groupe dont l'indice IND est égal à 0 et la station de base de la cellule C2 transmet un signal au groupe dont l'indice IND est égal à 1, puis à l'intervalle de temps consécutif à l'intervalle de temps donné, la station de base de la cellule C1 transmet un signal au groupe dont l'indice IND est égal à 1 et la station de base de la cellule C2 transmet un signal au groupe dont l'indice IND est égal à 2.

Selon un algorithme d'ordonnancement équitable, chaque station de base transmet un signal aux mobiles classés dans un groupe dont l'indice est différent à chaque intervalle de temps, de manière à ce que la station de base ait transmis des signaux aux mobiles de tous les groupes, à l'expiration d'une période comprenant un nombre d'intervalles de temps consécutifs égal au nombre de groupes, c'est-à-dire égal au nombre de stations de base du motif.

Les algorithmes d'ordonnancement équitable et pour faible interférence peuvent être combinés. Dans l'exemple de réseau tri-sectoriel, les N = 5 stations de base C1 à C5 peuvent transmettre des signaux aux mobiles classés dans les groupes dont les indices sont respectivement égaux à 0, 1, 2, 3 et 4 à un intervalle de temps donné, puis chaque station de base dessert les mobiles classés dans un groupe dont l'indice est incrémenté de 1 modulo N = 5 à chaque intervalle de temps suivant. Par conséquent, après N = 5 intervalles de temps, chaque station de base a transmis des signaux aux mobiles de tous les groupes couverts par la station de base et les N = 5 stations de base ont transmis des signaux aux mobiles classés dans des groupes dont les indices étaient respectivement différents à chaque intervalle de temps TTI.

Selon un autre algorithme d'ordonnancement, chaque station de base peut transmettre un signal aux mobiles qui sont classés dans un groupe dont l'indice est inchangé, c'est-à-dire dont la plage de puissance requise est sensiblement identique pour au moins deux intervalles de temps consécutifs, ces mobiles pouvant avoir une meilleure qualité instantanée de lien descendant afin de leur attribuer un débit élevé. Par ailleurs, au moins deux stations de base du motif peuvent transmettre des signaux à des mobiles classés dans des groupes associés au même indice.

Dans certaines cellules, la densité de mobiles peut varier au cours du temps. Par exemple, une partie d'une cellule correspondant à une zone de bureaux peut présenter une forte densité de mobiles seulement pendant la journée, les mobiles étant classés dans un groupe d'indice 1, et une autre partie de la cellule correspondant à une zone de restaurants peut présenter une forte densité de mobiles seulement pendant la soirée, les mobiles étant classés dans un groupe d'indice 2. Dans ce cas, pendant la journée, la station de base desservant ladite cellule transmet un signal aux mobiles classés dans le groupe d'indice 1 pendant la plupart des intervalles de temps, tandis que pendant la soirée, la station de base transmet un signal en priorité aux mobiles classés dans le groupe d'indice 2.

En variante, pendant au moins un intervalle de temps, au moins l'une des stations de base du motif ne transmet pas de signal utile aux mobiles situés dans la cellule associée à la station de base, ce qui réduit les puissances d'interférence reçues par les mobiles situés dans les cellules voisines.

Dans un exemple relatif au réseau tri-sectoriel, après N = 5 intervalles de temps, chacune des N = 5 stations de base n'a pas transmis de signal pendant un intervalle de temps respectif.

Dans un autre exemple, seulement l'une des stations de base du motif transmet un signal à des mobiles situés dans la cellule couverte par la station de base à chaque intervalle de temps, les autres stations de base ne transmettant pas de signal. Dans ce cas, les stations de base sont activées à tour de rôle pour la transmission de signaux.

Dans un autre exemple relatif au réseau tri-sectoriel, les mobiles couverts par chacune des N = 5 stations de base sont classés dans k groupe(s), avec 1 ≤ k ≤ N. Selon un algorithme d'ordonnancement, à l'expiration de N = 5 intervalles de temps consécutifs, chaque station de base a transmis des signaux aux mobiles de tous les groupes pendant k intervalles de temps et n'a pas transmis de signal utile aux mobiles pendant N-k intervalle(s) de temps.

De ce qui précède, il sera entendu que le procédé selon l'invention est aussi applicable à toutes les cellules du réseau réparties en motifs de cellules en nombre déterminé N par l'unité de traitement du dispositif de planification.

Par ailleurs, le procédé selon l'invention est exécuté de manière à ce que la charge de chaque station de base n'excède pas une charge maximale déterminée par l'opérateur du réseau, et la puissance d'émission de chaque station de base n'excède pas une puissance maximale d'émission.

L'invention décrite ici concerne un procédé et un dispositif pour planifier des transmissions de signaux à des mobiles depuis des stations de base couvrant respectivement des cellules dans un réseau de radiocommunication cellulaire, les transmissions étant partagées en des intervalles de temps. Selon une implémentation, les étapes du procédé de l'invention sont déterminées par les instructions d'un programme d'ordinateur incorporé dans un dispositif tel que le dispositif de planification DP. Le programme comporte des instructions de programme qui, lorsque ledit programme est exécuté dans un processeur du dispositif dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'informations lisible par un ordinateur et tout dispositif de traitements de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. - Procédé pour planifier des transmissions de signaux à des mobiles (M) depuis des stations de base (SB) couvrant respectivement des cellules dans un réseau de radiocommunication cellulaire (RR), les transmissions étant partagées en des intervalles de temps (TTI), **caractérisé en ce qu'**il comprend les étapes de :
diviser (E0) le réseau en des motifs (C1 - C5) ayant chacun des stations de base couvrant respectivement des cellules voisines et dont les transmissions sont susceptibles d'interférer entre elles,
pour chaque station de base (SB) d'un motif et à chaque intervalle de temps (TTI), classer (E22) les mobiles couverts par la station de base dans des groupes (GR) en fonction de puissances requises par les mobiles, le nombre des groupes étant égal au nombre de stations de base du motif, et
à chaque intervalle de temps (TTI), transmettre (E5) un signal aux mobiles classés dans l'un des groupes depuis au moins l'une des stations de base (SB) du motif.

2. - Procédé conforme à la revendication 1, comprenant en outre une association (E4) de puissances d'émission (PE) de chaque station de base du motif respectivement aux groupes de mobile (GR).

3. - Procédé conforme à la revendication 1 ou 2, selon lequel les stations de base (SB) du motif transmettent (SB) des signaux respectivement à des groupes de mobile ayant des plages de puissance requise différentes à chaque intervalle de temps (TTI).

4. - Procédé conforme à l'une quelconque des revendications 1 à 3, selon lequel au moins deux groupes de mobile (GR), vers lesquels au moins deux stations de base (SB) du motif transmettent des signaux pendant un même intervalle de temps (TTI), sont différents.

5. - Procédé conforme à l'une quelconque des revendications 1 à 4, selon lequel ladite au moins l'une des stations de base (SB) du motif a transmis le signal aux mobiles de tous les groupes (GR), à l'expiration d'une période comprenant un nombre d'intervalles de temps consécutifs égal au moins au nombre de stations de base du motif.

6. - Procédé conforme à l'une quelconque des revendications 1 à 5, selon lequel ladite au moins l'une des stations de base (SB) du motif transmet le signal aux mobiles classés dans un groupe dont la plage de puissance requise est sensiblement identique pour au moins deux intervalles de temps consécutifs.

7. - Procédé conforme à l'une quelconque des revendications 1 à 6, selon lequel au moins l'une des stations de base du motif ne transmet pas de signal aux mobiles pendant un intervalle de temps.

8. - Dispositif pour planifier des transmissions de signaux à des mobiles (M) depuis des stations de base (SB) couvrant respectivement des cellules dans un réseau de radiocommunication cellulaire (RR), les transmissions étant partagées en des intervalles de temps (TTI), **caractérisé en ce qu'**il comprend :
- un moyen (UT) pour diviser le réseau en des motifs (C1 - C5) ayant chacun des stations de base couvrant respectivement des cellules voisines et dont les transmissions sont susceptibles d'interférer entre elles,
- un moyen (CLA) pour classer les mobiles couverts par chaque station de base (SB) d'un motif dans des groupes (GR) en fonction de puissances requises par les mobiles à chaque intervalle de temps (TTI), le nombre des groupes étant égal au nombre de stations de base du motif, et
- un moyen (COM) pour commander la transmission d'un signal aux mobiles classés dans l'un des groupes depuis au moins l'une des stations de base (SB) du motif à chaque intervalle de temps (TTI).

9. - Contrôleur de réseau pour planifier des transmissions de signaux à des mobiles (M) depuis des stations de base (SB) couvrant respectivement des cellules dans un réseau de radiocommunication cellulaire (RR) et reliées au contrôleur de réseau, les transmissions étant partagées en des intervalles de temps (TTI), **caractérisé en ce qu'**il comprend :
- un moyen (UT) pour diviser le réseau en des motifs (C1 - C5) ayant chacun des stations de base couvrant respectivement des cellules voisines et dont les transmissions sont susceptibles d'interférer entre elles,
- un moyen (CLA) pour classer les mobiles couverts par chaque station de base (SB) d'un motif dans des groupes (GR) en fonction de puissances requises par les mobiles à chaque intervalle de temps (TTI), le nombre des groupes étant égal au nombre de stations de base du motif, et
- un moyen (COM) pour commander la transmission d'un signal aux mobiles classés dans l'un des groupes depuis au moins l'une des stations de base (SB) du motif à chaque intervalle de temps (TTI).

10. - Système pour planifier des transmissions de signaux à des mobiles (M) depuis des stations de base (SB) couvrant respectivement des cellules et reliées à un contrôleur de réseau dans un réseau de radiocommunication cellulaire (RR), les transmissions étant partagées en des intervalles de temps (TTI), **caractérisé en ce qu'**il comprend, répartis dans les stations de base et le contrôleur de réseau :
- un moyen (UT) pour diviser le réseau en des motifs (C1 - C5) ayant chacun des stations de base couvrant respectivement des cellules voisines et dont les transmissions sont susceptibles d'interférer entre elles,
- un moyen (CLA) pour classer les mobiles couverts par chaque station de base (SB) d'un motif dans des groupes (GR) en fonction de puissances requises par les mobiles à chaque intervalle de temps (TTI), le nombre des groupes étant égal au nombre de stations de base du motif, et
- un moyen (COM) pour commander la transmission d'un signal aux mobiles classés dans l'un des groupes depuis au moins l'une des stations de base (SB) du motif à chaque intervalle de temps (TTI).

11. - Programme d'ordinateur apte à être mis en oeuvre dans un dispositif pour planifier des transmissions de signaux à des mobiles (M) depuis des stations de base (SB) couvrant respectivement des cellules dans un réseau de radiocommunication cellulaire (RR), les transmissions étant partagées en des intervalles de temps (TTI), ledit programme étant **caractérisé en ce qu'**il comprend des instructions qui, lorsque le programme est chargé et exécuté dans ledit dispositif, réalisent les étapes de :
diviser (E0) le réseau en des motifs (C1 - C5) ayant chacun des stations de base couvrant respectivement des cellules voisines et dont les transmissions sont susceptibles d'interférer entre elles,
pour chaque station de base (SB) d'un motif et à chaque intervalle de temps (TTI), classer (E22) les mobiles couverts par la station de base dans des groupes (GR) en fonction de puissances requises par les mobiles, le nombre des groupes étant égal au nombre de stations de base du motif, et
à chaque intervalle de temps (TTI), transmettre (E5) un signal aux mobiles classés dans l'un des groupes depuis au moins l'une des stations de base (SB) du motif.

12. - Support d'enregistrement lisible par un dispositif de traitements de données pour planifier des transmissions de signaux à des mobiles (M) depuis des stations de base (SB) couvrant respectivement des cellules dans un réseau de radiocommunication cellulaire, les transmissions étant partagées en des intervalles de temps (TTI), ledit support d'enregistrement étant **caractérisé en ce qu'**il a enregistré un programme d'ordinateur comportant des instructions pour l'exécution des étapes suivantes :
diviser (E0) le réseau en des motifs (C1 - C5) ayant chacun des stations de base couvrant respectivement des cellules voisines et dont les transmissions sont susceptibles d'interférer entre elles,
pour chaque station de base (SB) d'un motif et à chaque intervalle de temps (TTI), classer (E22) les mobiles couverts par la station de base dans des groupes (GR) en fonction de puissances requises par les mobiles, le nombre des groupes étant égal au nombre de stations de base du motif, et
à chaque intervalle de temps (TTI), transmettre (E5) un signal aux mobiles classés dans l'un des groupes depuis au moins l'une des stations de base (SB) du motif.
